# EUROPÄISCHE PATENTSCHRIFT

(11) **EP 2 539 660 B1**
(45) Veröffentlichungstag und Bekanntmachung des Hinweises auf die Patenterteilung: **08.01.2014**
(21) Anmeldenummer: 11701247.6
(22) Anmeldetag: 24.01.2011
(51) Int. Cl.: F27D 21/00, F27D 21/04, B22D 2/00, G01K 11/32

(54) **GIESSPFANNE ODER ZWISCHENBEHÄLTER ZUR AUFNAHME EINES FLÜSSIGEN METALLS MIT INTEGRIERTEM MESSELEMENT ZUR ERFASSUNG DER TEMPERATUR UND/ODER MECHANISCHEN BELASTUNG**
FOUNDRY LADLE OR INTERMEDIATE VESSEL FOR RECEIVING A LIQUID METAL, COMPRISING AN INTEGRATED MEASURING ELEMENT FOR DETECTING THE TEMPERATURE AND/OR MECHANICAL LOAD
POCHE DE COULÉE OU RÉCIPIENT INTERMÉDIAIRE SERVANT À RECEVOIR UN MÉTAL LIQUIDE ET MUNI D'UN ÉLÉMENT DE MESURE INTÉGRÉ PERMETTANT DE DÉTECTER LA TEMPÉRATURE ET/OU LA CONTRAINTE MÉCANIQUE

(30) Priorität: 23.02.2010 DE 102010008944
(43) Veröffentlichungstag der Anmeldung: 02.01.2013
(73) Patentinhaber: SMS Siemag AG, 40237 Düsseldorf (DE)
(72) Erfinder: LIEFTUCHT, Dirk, 48739 Legden (DE); PLOCIENNIK, Uwe, 40882 Ratingen (DE)
(74) Vertreter: Kross, Ulrich
(86) Internationale Anmeldenummer: PCT/EP2011/050901
(87) Internationale Veröffentlichungsnummer: WO 2011/104053

(56) Entgegenhaltungen:
- WO-A2-2004/015349
- DD-A1- 240 947
- DE-C1- 10 141 771
- DE-C1- 19 827 389

## Beschreibung

Die Erfindung betrifft eine Gießpfanne oder einen Zwischenbehälter zur Aufnahme eines flüssigen Metalls zu seiner weiteren Verarbeitung, wobei zumindest ein Teil der Wandung der Gießpfanne oder des Zwischenbehälters mindestens ein Messelement zur Erfassung der mechanischen Belastung aufweist.

Metallurgische Anlagen wie Schmelzöfen, die mit Heizelementen hoher Energiedichte versehen sind, sind zumeist mit Temperaturüberwachungselementen versehen, mit denen überwacht werden kann, ob die thermische Belastung der Wandung des Ofens zu hoch wird. Hierfür werden die Öfen zumeist mit einer Kühlung versehen, wie es beispielsweise die EP 1 600 717 B1 zeigt. Der hier beschriebene Elektroofen ist mit einer Wasserkühlung ausgestattet, d. h. zwischen einer Heißseite und einer Kaltseite ist ein Hohlraum angeordnet ist, der von Kühlwasser durchströmt werden kann.

Die Überwachung eines Ofens kann mit Lichtwellenleitern erfolgen, wie es in der WO 2004/015349 A2 beschrieben ist. Hier ist vorgesehen, dass der Betriebszustand eines Schmelzofens mit Hilfe von Lichtwellenleitern überwacht wird. Die Lichtwellenleiter sind zwischen einer feuerfesten Schicht, die eine Wärmequelle umgibt, und einer Außenwand des Schmelzofens angeordnet. Die Lichtwellenleiter sind beispielsweise auf einer flexiblen Matte befestigt. Eine exakte Zuordnung der gemessenen Temperaturen zu einer eng begrenzten Messstelle ist allerdings hier nicht möglich, da die Temperaturen über die Strahlung an die Lichtwellenleiter übertragen werden. Ähnliche Lösungen zeigen die DE 101 41 771 C1 und die DD 240 947 A1. Die DE 198 27 389 C1 beschäftigt sich in allgemeiner Art mit der Messung von Kräften und Spannungen.

Zur generellen Technologie der Messung mittels Lichtwellenleitern wird auf die US 4,823,166 hingewiesen und insoweit ausdrücklich Bezug genommen.

Bei Gießpfannen oder Zwischenbehältern zur Aufnahme eines flüssigen Metalls zu seiner weiteren Verarbeitung sind derartige Systeme bislang nicht bekannt. Allenfalls sind einzelne Messsonden gebräuchlich, mit denen punktuell an ausgewählten Stellen der Wandung eine Temperaturüberwachung erfolgen kann. Dasselbe gilt für die Überwachung von mechanischen Spannungen in den Wandungen der Gießpfanne bzw. des Zwischenbehälters. Sofern es überhaupt zu einer Messung dieser Spannungen kommt, sind diese auf einzelne ausgewählte Bereiche beschränkt.

Der vorliegenden Erfindung liegt die Aufgabe zugrunde, eine Gießpfanne bzw. einen Zwischenbehälter zur Aufnahme eines flüssigen Metalls so auszustatten, dass es in einfacher und kostengünster Weise möglich wird, eine genaue Überwachung der Wandungen der genannten Behälter vorzunehmen. Weiterhin soll es möglich sein, die mechanischen Spannungen in der Wandung der Behälter in gleichermaßen einfacher Weise zu überwachen. Mit einer solchen kontinuierlichen Messung soll also eine einfache und genaue Bestimmung der mechanischen und thermischen Belastung der maßgeblichen Bauteile des Behälters möglich sein.

Die Lösung dieser Aufgabe durch die Erfindung ist dadurch gekennzeichnet, dass das Messelement mindestens einen Lichtwellenleiter umfasst, der in der Wandung der Gießpfanne oder des Zwischenbehälters integriert ist, wobei der verlegte Lichtwellenleiter zumindest abschnittsweise mit direktem Materialkontakt verbaut ist und wobei der Lichtwellenleiter in einer Ausmauerung angeordnet ist, die zwischen einer der Innenseite der Gießpfanne oder dem Zwischenbehälter zugewandten Schicht aus feuerfestem Material und einem äußeren Metallgehäuse angeordnet ist.

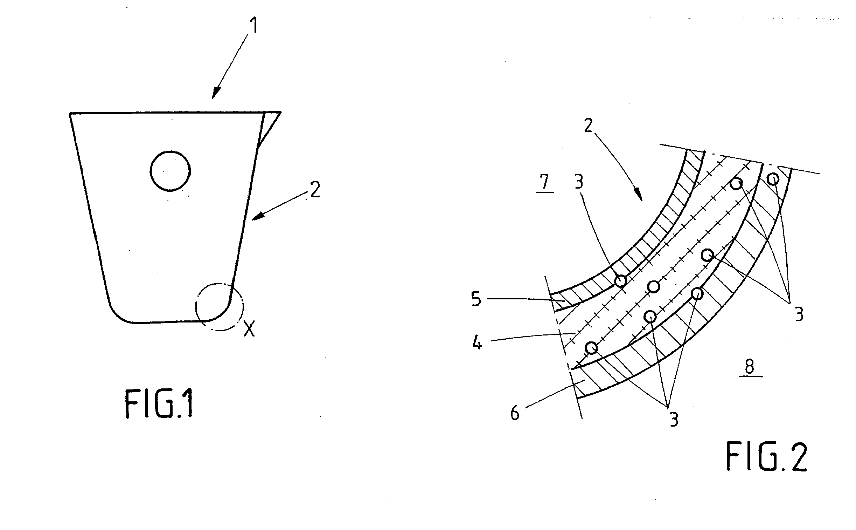

Die Wandung ist also mehrschichtig aufgebaut. Sie umfasst mit Vorteil mindestens eine Ausmauerung. Der mindestens eine Lichtwellenleiter kann in die Ausmauerung integriert sein, insbesondere in einer Bohrung in der Ausmauerung. An die Ausmauerung kann an deren der Innenseite der Gießpfanne oder des Zwischenbehälters zugewandten Seite eine Schicht aus feuerfestem Material angeordnet sein. An die Ausmauerung kann auch an deren der Außenseite der Gießpfanne oder des Zwischenbehälters zugewandten Seite ein Metallgehäuse angeordnet sein. Der mindestens eine Lichtwellenleiter kann gemäß Fig. 2 innerhalb der Ausmauerung, zwischen der Ausmauerung und dem Metallgehäuse, innerhalb des Metallgehäuses und/oder zwischen der Ausmauerung und der Schicht aus feuerfesten Material angeordnet sein.

Der Lichtwellenleiter ist zur Dehnungsmessung beziehungsweise zur Bestimmung der mechanischen Belastung eines Bauteils fest, vorzugsweise mit allseitigem Materialkontakt, in ein Material eingebaut /eingespannt sein. Alternativ kann der Lichtwellenleiter auch lose in einer Bohrung oder einem Hüllrohr liegend verwendet werden, zwecks Temperaturmessung aufgrund einer thermischen Ausdehnung des Lichtwellenleiters. Bei einer losen Verlegung ist der Lichtwellenleiter nicht zur Dehnungsmessung geeignet.

Der Lichtwellenleiter kann mit einer Auswerteeinheit in Verbindung stehen, in der die Temperaturverteilung in der Wandung der Gießpfanne oder des Zwischenbehälters ermittelt werden kann.

Er kann auch mit einer Auswerteeinheit in Verbindung stehen, in der die mechanische Belastung in der Wandung der Gießpfanne oder des Zwischenbehälters ermittelt werden kann (Nutzung eines sog. "optischen Dehnmessstreifens"). In diesem Falle kann es sinnvoll sein, dass zumindest abschnittsweise parallel zum Lichtwellenleiter im Hüllrohr (Temperaturmessung) noch ein zweiter Lichtwellenreiter, ohne Hüllrohr direkt im Grundmaterial eingebracht ist (Dehnungsmessung).

Gemäß der Erfindung können Lichtwellenleiter nur für die Temperaturmessung oder nur für die Dehnungsmessung oder gleichzeitig für beide Anwendungen bei der Gießpfanne oder dem Zwischenbehälter vorgesehen sein.

Durch die Einbringung von Lichtwellenleitern in die Wandungen der metallurgischen Gefäße Gießpfanne und Zwischenbehälter können Temperaturen der Schichten des Gehäuses als Temperaturprofil über die Gefäßoberfläche erfasst werden. Ebenfalls erfasst werden können dynamische Änderungen bedingt durch Strömungen in der Schmelze. Hierdurch wird eine Beurteilung des Verschleißzustandes und der vorliegenden Strömungssituation möglich.

Der erfindungsgemäße Vorschlag bietet die Möglichkeit, Spannungszustände in der gemessenen Ebene zu erfassen und so die mechanische Belastung der Bauteile zu erfassen. Das vorgeschlagene Konzept ermöglicht eine Darstellung der thermischen und mechanischen Belastung der Bauteile über ihre Oberfläche im jeweiligen Betriebszustand.

In der Zeichnung ist ein Ausführungsbeispiel der Erfindung dargestellt. Es zeigen:
- Fig. 1: eine Gießpfanne in der Vorderansicht und
- Fig. 2: die Einzelheit "X" gemäß Fig. 1 in geschnittener Darstellung.

In Fig. 1 ist eine Gießpfanne 1 zu sehen, die grundsätzlich herkömmlich aufgebaut ist und eine Wandung 2 aufweist. Der Aufbau der Wandung 2 ist in Fig. 2 näher dargestellt.

Die Wandung 2 ist demgemäß dreischichtig ausgeführt. Die der heißen Innenseite 7 zugewandte Schicht 5 ist aus feuerfestem Material. Die der Außenseite 8 zugewandte Schicht 6 ist ein Metallgehäuse. Dazwischen befindet sich eine Ausmauerung, die die Schicht 4 bildet.

Wie zu sehen ist, sind Messelemente in Form von Lichtwellenleitern 3 in entsprechenden Bohrungen bzw. Kanälen in der Ausmauerung 4 eingebracht. Wichtig ist dabei, dass ein guter Kontakt zwischen dem Lichtwellenleiter 3 und der Ausmauerung 4 vorliegt, so dass ein guter Wärmeübergang stattfinden kann.

Die Lichtwellenleiter 3 bestehen aus einer Grundfaser, die je nach verwendetem Messverfahren eine unterschiedliche Dicke aufweist. Das Faser-Bragg-Verfahren erfordert relativ dünne Lichtwellenleiter (Singel-Mode-Fasern) mit Kerndurchmessern (= Dicke der Grundfaser) von ∼ 5 - 10 µm. Im Vergleich dazu erfordert das Roman Verfahren (OTDR- und OFDR-Verfahren), dickere Lichtwellenleiter (Multimode-Fasern) mit einem Kerndurchmesser von ∼ 50 - 60 µm. Sofern der Lichtwellenleiter in einem Hüllrohr angeordnet ist, weist dieses vorzugsweise zumeist einen Durchmesser von ca. 500 bis 2.200 µm auf.

Der Lichtwellenleiter 3 kann dabei mäanderförmig in der Ausmauerung 4 verlegt sein, so dass die Fläche bezüglich der Temperaturentwicklung und auch hinsichtlich der mechanischen Belastung gut überwacht werden kann.

Der Lichtwellenleiter 3 besteht also aus einer Grundfaser, die mit oder ohne Hüllrohr in vorher erstellte Bohrungen bzw. Kanäle in der Ausmauerung 4 der Wandung 2 eingefasst oder eingebunden ist. Die Messfaser kann dabei Temperaturen bis zu 600 °C Dauerbelastung problemlos ertragen.

Um die Robustheit der Signalübertragung zu erhöhen, werden die Lichtwellen über sog. Linsenstecker von dem Gehäuse des metallurgischen Gefäßes (Gießpfanne oder Zwischenbehälter) in der jeweiligen Ruheposition zu einer Auswerteeinheit geführt (s. unten).

Als Messverfahren zur Temperaturmessung kommt das so genannte FBG-Verfahren und/oder bei entsprechender Verlegegeometrie (spiral- und/oder mäanderförmig) der Lichtwellenleitfasern das OTDR-Verfahren sowie das OFDR-Verfahren zum Einsatz.

Die als Bestandteil des Temperatursensors fungierende Glasfaser ist mit einem nicht dargestellten Temperaturerfassungssystem verbunden. Mittels des Erfassungssystems wird Laserlicht erzeugt, das in den Lichtwellenleiter 3 eingespeist wird. Die von der Lichtwellenleitfaser 3 gesammelten Daten werden mittels des Erfassungssystems in Temperaturen umgerechnet und den verschiedenen Messorten zugeordnet.

Die Auswertung kann wie erwähnt beispielsweise nach dem Faser-Bragg-Gitter-Verfahren (FBG-Verfahren) erfolgen. Hierbei werden geeignete Lichtwellenleiter verwendet, die Messstellen mit einer periodischen Variation des Brechungsindexes bzw. Gitters mit solchen Variationen eingeprägt bekommen. Diese periodische Variation des Brechungsindexes führt dazu, dass der Lichtwellenleiter in Abhängigkeit der Periodizität für bestimmte Wellenlängen an den Messstellen einen dielektrischen Spiegel darstellt. Durch eine Temperaturänderung an einem Punkt wird die Bragg-Wellenlänge verändert, wobei genau diese reflektiert wird. Licht, das die Bragg-Bedingung nicht erfüllt, wird durch das Bragg-Gitter nicht wesentlich beeinflusst. Die verschiedenen Signale der unterschiedlichen Messstellen können dann aufgrund von Laufzeitunterschieden voneinander unterschieden werden. Der detailierte Aufbau solcher Faser-Bragg-Gitter sowie die entsprechenden Auswerteeinheiten sind allgemein bekannt. Die Genauigkeit der Ortsauflösung ist durch die Anzahl der eingeprägten Messstellen gegeben. Die Größe einer Messstelle kann beispielsweise im Bereich von 1 mm bis 10 mm liegen.

Alternativ kann zur Messung der Temperatur auch das "Optical-Frequency-Domain-Reflectometry"-Verfahren (OFDR-Verfahren) oder das "Optical-Time-Domain-Reflectometry"-Verfahren (OTDR-Verfahren) eingesetzt werden. Diese Verfahren basieren auf dem Prinzip der faseroptischen Ramanrückstreuung, wobei ausgenutzt wird, dass eine Temperaturveränderung am Punkt eines Lichtleiters eine Veränderung der Ramanrückstreuung des Lichtwellenleitermaterials verursacht. Mittels der Auswerteeinheit (z. B. einem Raman-Reflektometer) können dann die Temperaturwerte entlang einer Faser ortsaufgelöst bestimmt werden, wobei bei diesem Verfahren über eine bestimmte Länge des Leiters gemittelt wird. Diese Länge beträgt ca. einige Zentimeter. Die verschiedenen Messstellen werden wiederum durch Laufzeitunterschiede voneinander getrennt. Der Aufbau solcher Systeme zur Auswertung nach den genannten Verfahren ist allgemein bekannt, ebenso wie die nötigen Laser, die das Laserlicht innerhalb des Lichtwellenleiters 3 erzeugen.

Bei der Erfassung der mechanischen Belastung durch Dehnungsmessungen stehen mit Hilfe von Lichtwellenleitern folgende Messverfahren zur Verfügung:

Beim Einsatz von Mikrobendingsensoren handelt es sich um faseroptische Sensoren, die auf den optischen Effekt des Mikrobendings basieren. Die faseroptischen Sensoren reagieren bei einer Faserkrümmung (Biegung) des Lichtwellenleiters mit einer Lichtabstrahlung. Diese Abstrahlverluste können mit Hilfe eines Rückstreu-Reflektometers ortsaufgelöst gemessen werden. Eine Drahtwendel entlang des Lichtwellenleiters ermöglicht die Induktion von Krümmungsverlusten an beliebigen Stellen der Faser.

Beim Einsatz von Faseroptischen Bragg-Gitter-Sensoren (FBG-Sensoren) handelt es sich um Sensoren, die eine permanente Modulation der Brechzahl besitzen. Die Längenabmessungen des Gitters betragen wenige Millimeter. Tritt Laserlicht auf das Gitter, erfolgt eine Reflexion, die maximal wird, wenn der Gitterabstand mit der Laserwellenlänge übereinstimmt. Äußere Einflüsse auf das Fasergitter, wie Temperatur und Dehnung, verändern die Gitterkonstante, so dass sich die Bragg-Wellenlänge des reflektierten Lichtes verschiebt. Die Verschiebung der Bragg-Wellenlänge ist ein direktes Maß für die Temperatur- bzw. die Dehnungsänderungen des FBG-Sensors.

Brillouin-Sensoren basieren auf der Bragg-Reflexion von Laserlicht an akustischen
Gittern, die durch Elektronenschwingungen innerhalb eines Siliziummoleküls induziert werden. Analog zu den oben erwähnten FBG-Sensoren kann mit der Messung der Bragg-Wellenlänge die Temperatur und Dehnung entlang der Faser ermittelt werden. In Kombination mit einem optischen Rückstreuverfahren kann die Faserdehnung lückenlos entlang der Faser gemessen werden.

Die Technologie der Messung von Temperaturen und Dehnungen bzw. Spannungen ist als solche also bekannt (auch unter der Bezeichnung "optischer Dehmessstreifen"), so dass insoweit auf den Stand der Technik verwiesen wird.

Vorteilhaft ist, dass eine Unempfindlichkeit gegenüber elektromagnetischen Feldern vorliegt. Auch bei rauen Umweltbedingungen, wie sie in einer hüttentechnischen Anlage typisch sind, liegt eine hohe Zuverlässigkeit vor, da eine hohe Schwingungsbelastung nicht problematisch ist.

### Bezugszeichenliste:

- 1: Gießpfanne / Zwischenbehälter
- 2: Wandung
- 3: Messelement (Lichtwellenleiter)
- 4: Ausmauerung
- 5: Schicht aus feuerfestem Material
- 6: Metallgehäuse
- 7: Innenseite
- 8: Außenseite

## Patentansprüche

1. Gießpfanne oder Zwischenbehälter (1) zur Aufnahme eines flüssigen Metalls zu seiner weiteren Verarbeitung, wobei zumindest ein Teil der Wandung (2) der Gießpfanne oder des Zwischenbehälters (1) mindestens ein Messelement (3) zur Erfassung der mechanischen Belastung aufweist,
**dadurch gekennzeichnet, dass**
das Messelement (3) mindestens einen Lichtwellenleiter umfasst, der in der Wandung (2) der Gießpfanne oder des Zwischenbehälters (1) integriert ist,
wobei der verlegte Lichtwellenleiter zumindest abschnittsweise mit direktem Materialkontakt verbaut ist und
wobei der Lichtwellenleiter in einer Ausmauerung (4) angeordnet ist, die zwischen einer der Innenseite (7) der Gießpfanne oder dem Zwischenbehälter (1) zugewandten Schicht (5) aus feuerfestem Material und einem äußeren Metallgehäuse (6) angeordnet ist.

2. Gießpfanne oder Zwischenbehälter nach Anspruch 1,
**dadurch gekennzeichnet,**
**dass** der mindestens eine Lichtwellenleiter (3) in einer Bohrung in der Ausmauerung (4) integriert ist.

3. Gießpfanne oder Zwischenbehälter nach einem der Ansprüche 1 oder 2,
**dadurch gekennzeichnet,**
**dass** die Gießpfanne oder der Zwischenbehälter (1) weiterhin eine Auswerteeinheit umfasst und dass der Lichtwellenleiter (3) mit der Auswerteeinheit in Verbindung steht, in der die mechanische Belastung in der Wandung (2) der Gießpfanne oder des Zwischenbehälters (1) ermittelt werden kann.

## Claims

1. Teeming ladle or tundish (1) for receiving a liquid metal for further processing thereof, wherein at least a part of the wall (2) of the teeming ladle or the tundish (1) comprises at least one measuring element (3) for detecting temperature and/or mechanical load, **characterised in that** the measuring element (3) comprises at least one optical waveguide integrated in the wall (2) of the teeming ladle or the tundish (1), wherein the buried optical waveguide is installed at least in a section with direct material contact and wherein the optical waveguide (3) is arranged in a refractory lining (4), which is arranged between a layer (5), which faces the inner side (7) of the teeming ladle or tundish, of refractory material and an outer metal housing (6).

2. Teeming ladle or tundish according to claim 1, **characterised in that** the at least one optical waveguide (3) is integrated in a bore in the refractory lining (4).

3. Teeming ladle or tundish according to one of claims 1 and 2, **characterised in that** the teeming ladle or tundish further comprises an evaluating unit and that the optical waveguide (3) is connected with the evaluating unit, in which the mechanical load in the wall (2) of the teeming ladle or the tundish (1) can be ascertained.

## Revendications

1. Poche de coulée ou panier de coulée (1) destiné à la réception d'un métal liquide pour le traitement ultérieur de ce dernier, dans lequel au moins une partie de la paroi (2) de la poche de coulée ou du panier de coulée (1) présente au moins un élément de mesure (3) pour l'enregistrement de la sollicitation mécanique, **caractérisé en ce que** l'élément de mesure (3) comprend au moins un câble à fibres optiques qui est intégré dans la paroi (2) de la poche de coulée ou du panier de coulée (1), le câble à fibres optiques à l'état posé étant réalisé de façon à entrer directement en contact avec la matière au moins par tronçons, et le câble à fibres optiques étant disposé dans une chemise de four (4) qui est disposée entre une couche (5) constituée d'un matériau réfractaire, tournée vers le côté interne (7) de la poche de coulée ou du panier de coulée (1), et un logement métallique externe (6).

2. Poche de coulée ou panier de coulée selon la revendication 1, **caractérisé en ce que** ledit au moins un câble à fibres optiques (3) est intégré dans un alésage pratiqué dans la chemise de four (4).

3. Poche de coulée ou panier de coulée selon l'une quelconque des revendications 1 ou 2, **caractérisé en ce que** la poche de coulée ou le panier de coulée (1) comprend en outre une unité d'évaluation et **en ce que** le câble à fibres optiques (3) est mis en liaison avec l'unité d'évaluation, unité dans laquelle on peut déterminer la sollicitation mécanique dans la paroi (2) de la poche de coulée ou du panier de coulée (1).
